# EUROPEAN PATENT APPLICATION

(11) **EP 3 932 735 A1**
(43) Date of publication of application: **05.01.2022**
(21) Application number: 20315328.3
(22) Date of filing: 29.06.2020
(51) Int. Cl.: B60N 2/90

(54) **PARTITION FOR SEAT OF MASS TRANSPORTATION VEHICLE**

(71) Applicant: UUDS AERO, 95700 Roissy en France (FR)
(72) Inventor: Ehrhard, Julian, 60300 Senlis (FR)
(74) Representative: BCF Global

(57) **Abstract**

A partition for a seat of a mass transportation vehicle is disclosed. The seat has: a seat bottom; a backrest connected to the seat bottom; and a headrest connected to the backrest and being disposed in front of the backrest. The partition has: a partition wall; an arm connected to a side of the partition wall, the arm being configured for being received between the headrest and the backrest; and a support member connected to the side of the partition wall, the support arm being positioned for abutting a front of the backrest at a position vertically lower than the headrest.

## Description

### CROSS-REFERENCE

None

### FIELD OF TECHNOLOGY

The present technology relates to partitions for seats of mass transportation vehicles.

### BACKGROUND

Mass transportation vehicles, such as aircraft, trains and buses have seat arrangements which attempt to maximize the number of passengers. With some exceptions, such as in first class or business class in aircraft, this results in the seats, and therefore the passengers, being close to each other.

Such proximity offers little privacy to the passengers. Additionally, this proximity offers little protection for a passenger from infectious aerosols and spray droplets that may be expelled from the mouths of nearby passengers sneezing or coughing.

One known solution consists in providing fixed rigid partitions between adjacent seats. However, mounting such partitions can be difficult and time consuming. Also, as seats can differ from one vehicle to another, or even within the same vehicle, many different models of partitions, or at least different mounting hardware, are required. Additionally, since the partitions have to be cleaned and decontaminated at their fixed locations, thoroughly cleaning and disinfecting the surfaces of the partitions can be difficult.

There is therefore a desire for a device for a seat of a mass transportation vehicle that can offer the passenger occupying the seat some privacy and some level of protection from infectious aerosols and spray droplets that may be expelled from the mouths of other passengers.

### SUMMARY

It is an object of the present technology to ameliorate at least some of the inconveniences present in the prior art.

According to one aspect of the present technology, there is provided a partition for a seat of a mass transportation vehicle. The seat has: a seat bottom; a backrest connected to the seat bottom; and a headrest connected to the backrest and being disposed in front of the backrest. The partition has: a partition wall; an arm connected to a side of the partition wall, the arm being configured for being received between the headrest and the backrest; and a support member connected to the side of the partition wall, the support arm being positioned for abutting a front of the backrest at a position vertically lower than the headrest.

In some embodiments, the arm defines a hook. The hook is configured such that a connection between the headrest and the backrest is received at least in part in the hook.

In some embodiments, the arm is pivotally connected to the side of the partition wall. The arm is pivotable between a stowed position and a mounting position. In the stowed position, the arm is generally parallel to the side of the partition wall. In the mounting position, the arm is generally perpendicular to the side of the partition wall and is positioned so as to be received between the headrest and the backrest.

In some embodiments, a hinge pivotally connects the arm to the side of the partition wall.

In some embodiments, when pivoting from the stowed position to the mounting position, the arm pivots toward a rear of the partition wall.

In some embodiments, the support is pivotally connected to the side of the partition wall. The support member is pivotable between a stowed position and a mounting position. In the stowed position, the support member is generally parallel to the side of the partition wall. In the mounting position, the support member is generally perpendicular to the side of the partition wall and is positioned so as to contact the backrest.

In some embodiments, a hinge pivotally connecting the support member to the side of the partition wall.

In some embodiments, when pivoting from the stowed position to the mounting position, the support member pivots toward a front of the partition wall.

In some embodiments, the arm and the support member are connected closer to a rear end of the partition wall than to a front end of the partition wall.

In some embodiments, the arm is longer than the support member.

In some embodiments, the partition has multiple sections pivotally connected to each other. The sections are pivotable between an extended configuration and a retracted configuration.

According to another aspect of the present technology, there is provided a seat assembly having a seat and the partition according to one or more of the above aspect and embodiments mounted to the seat. The seat has: a seat bottom; a backrest connected to the seat bottom; and a headrest connected to the backrest and being disposed in front of the backrest. The arm of the partition is received between the headrest and the backrest. The support member of the partition abuts the front of the backrest at a position vertically lower than the headrest.

According to another aspect of the present technology, there is provided a method for mounting a partition on a seat of a mass transportation vehicle. The partition has: a partition wall; an arm connected to a side of the partition wall; and a support member connected to the side of the partition wall. The seat has: a seat bottom; a backrest connected to the seat bottom; and a headrest connected to the backrest and being disposed in front of the backrest. The method includes: inserting the arm between the headrest and the backrest; and abutting the support member against a front of the backrest at a position vertically lower than the headrest.

In some embodiments, the arm defines a hook. The step of inserting the arm between the headrest and the backrest includes placing the hook over a connection between the headrest and the backrest.

In some embodiments, the method also includes the steps of pivoting the arm from a stowed position to a mounting position prior to inserting the arm between the headrest and the backrest; and pivoting the support member from a stowed position to a mounting position prior to abutting the support member against the front of the backrest.

For purposes of the present specification, the term "generally perpendicular" means at an angle between 70 and 110 degrees, including 90 degrees, from a given surface, and the term "generally parallel" means at an angle between -20 and +20 degrees, including 0 degree, from a given surface.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of embodiments of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a perspective view taken from a front, left side of a passenger seat of a mass transportation vehicle with a partition according to the present technology mounted thereon;
Figure 2 is a perspective view taken from a front, left side of the partition of Figure 1, with a partition wall of the partition being shown transparent to render components mounted on a right side of the partition wall visible;
Figure 3 is a perspective view taken from the front, left side of the passenger seat and the partition of Figure 1 with the partition wall of the partition being shown transparent to show how the partition is mounted on the seat;
Figure 4 is a perspective view taken from a front, left side of an alternative embodiment of the partition of Figure 2; and
Figure 5 is a perspective view taken from a front left side of a group of three passenger seats of a mass transportation vehicle provided with two partitions according to the embodiment of Figure 2 and one partition according to the embodiment of Figure 4.

### DETAILED DESCRIPTION

A partition 10 of the present technology will be described in use with a passenger seat 12 of an aircraft. It is contemplated that the present technology could be used with seats of other types of mass transportation vehicles, such as, but not limited to, trains and buses.

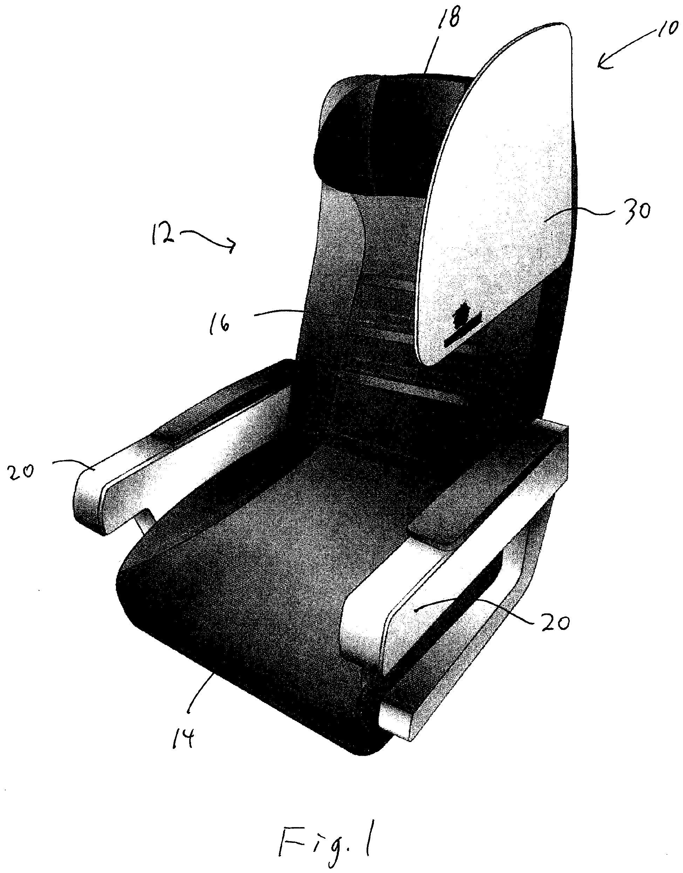

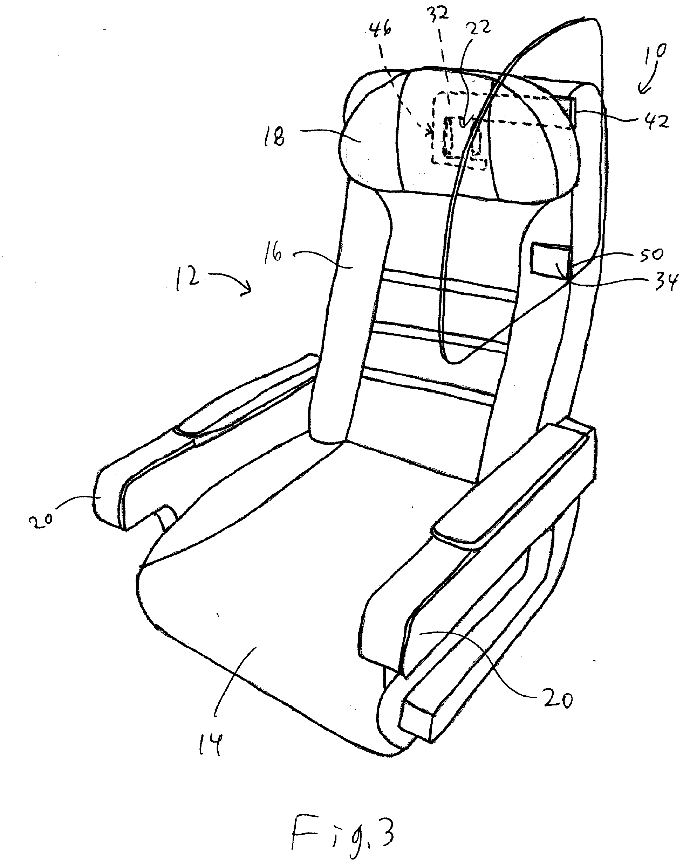

With reference to Figure 1, the passenger seat 12 has a seat bottom 14, a backrest 16 connected to the seat bottom 14, a headrest 18 and armrests 20. The backrest 16 can partially recline. The headrest 18 is connected to the backrest 16 and is disposed in front of the backrest 16. In the present embodiment, a connection between the headrest 18 and the backrest 16, such as adjustment mechanism 22 (shown in dotted lines in Figure 3), permits adjustment of a height of the headrest 18 in order to accommodate passengers of different heights. It is contemplated that the connection between headrest 18 and the backrest 16 could be fixed. Other types of connections between the headrest 18 and the backrest 16 are contemplated. It is contemplated that in some embodiments the armrests 20 could be omitted and/or that the backrest 18 could not recline.

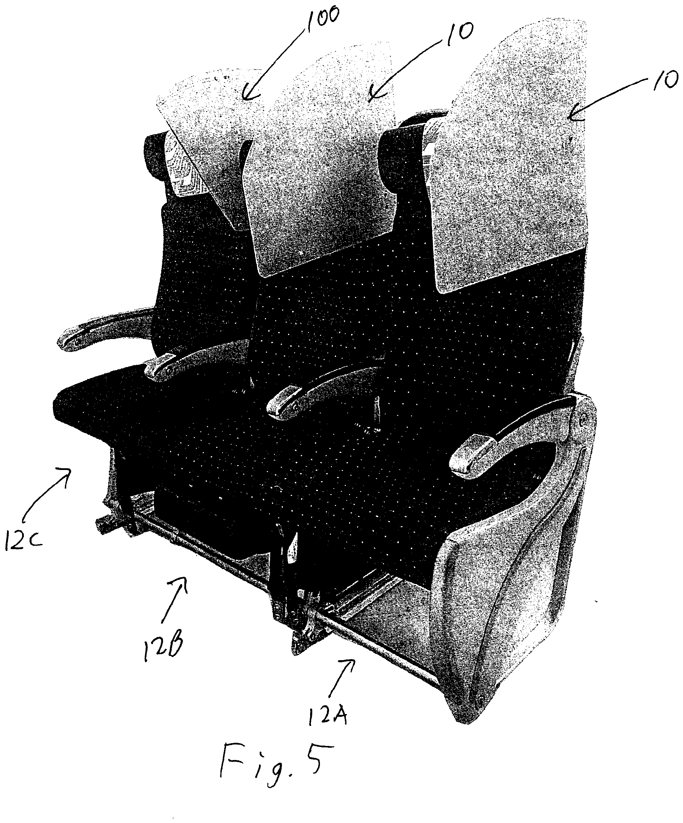

In Figure 1, the partition 10 is mounted to passenger seat 12 to form a seat assembly. The partition 10 is non-permanently mounted to the seat 12 so as to be easily installed on and removed from the passenger seat 12. As can be seen in Figure 5, the partition 10 can be mounted onto an aisle seat 12A, so as to partially separate the seat 12A from the aisle, or between two adjacent seat 12A, 12B, so as to partially separate the seats 12A, 12B from each other. The seats 12A, 12B are similar to the seat 12 and as such will not be described again in detail herein.

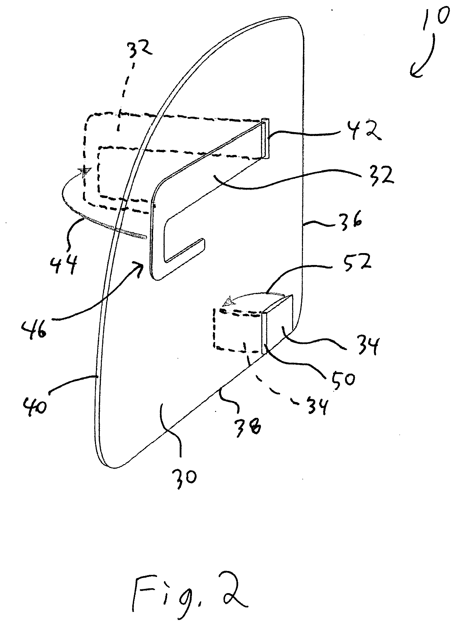

With reference to Figure 2, the partition 10 will be described in more detail. The partition 10 has a partition wall 30, an arm 32 and a support member 34. Although shown as transparent in Figures 2 and 3 to allow the arm 32, the support member 34 and the seat 12 to be seen through the partition wall 30, the partition wall 30 is made from an opaque or translucent material to provide some privacy to the passenger sitting in the seat 12. However, it is contemplated that the partition wall 30 could be made of transparent material. It is contemplated that the partition wall 30 could be made of plastic or composite material. Other materials are contemplated.

The partition wall 30 has a rear edge 36, a lower edge 38 perpendicular to the rear edge 36, and an arcuate edge 40 extending from the top of the rear edge 36 to the front of the lower edge 38. It is contemplated that the partition wall 30 could have another shape. For example, it is contemplated that the partition wall 30 could be rectangular. In the present embodiment, the partition wall 30 is 45 centimeters high and 45 centimeters long, but other dimensions are contemplated.

The arm 32 is pivotally connected to a right side of the partition wall 30 by a hinge 42. It is contemplated that means other than the hinge 42 could be used to pivotally connect the arm 32 to the right side of the partition wall 30. The arm 32 is pivotable between a stowed position (shown in solid lines in Figure 2) and a mounting position (shown in dotted lines in Figure 2). In the stowed position, the arm 32 is generally parallel to the right side of the partition wall 30. In the present embodiment, in the stowed position, the arm 32 at least partially rests against the right side of the partition wall 30 and does not extend forward of the partition wall 30. In the mounting position, the arm 32 is generally perpendicular to the right side of the partition wall 30. In the present embodiment, when the arm 32 pivots from the stowed position to the mounting position, the arm 32 pivots towards the rear of the partition wall 30, as indicated by arrow 44 in Figure 2. As can be seen, the hinge 42 is disposed on the upper half of the partition wall 30 on a rear portion of the partition wall 30. As such, the arm 32 is connected closer to a rear end of the partition wall 30 than to a front end of the partition wall 30. In the present embodiment, the arm 32 is made from the same material as the partition wall 30, but it is contemplated that the arm 32 could be made from a different material.

It is contemplated that the arm 32 could be connected to the partition wall 30 in other ways. For example, it is contemplated that the arm 32 could be non-permanently connected to the right side of the partition wall 30 in the mounting position, by clips for example, and that the arm 32 could be removed from the partition wall 30 when the partition 10 is not in use, such as when being stored or cleaned for example.

The arm 32 defines a hook 46 at its distal end. As shown in Figure 3, the hook 46 is sufficiently large to receive the connection between the headrest 18 and the backrest 16, which in the present embodiment is the adjustment mechanism 22. As can be seen, when the arm is in the mounting position, the hook 46 opens toward the partition wall 30 (i.e. towards the left side of the seat 12). It is contemplated that the hook 46 could be omitted. For example, it is contemplated that instead of the hook 46, the arm 32 could define a pair of fingers that received the connection between the headrest 18 and the backrest 16 therebetween.

In the present embodiment, the support member 34 is a rectangular flap. It is contemplated that the support member 34 could be a flap having another shape or could be another type of support member, such as one or more pegs for example. The support member 34 is pivotally connected to the right side of the partition wall 30 by a hinge 50. It is contemplated that means other than the hinge 50 could be used to pivotally connect the support member 34 to the right side of the partition wall 30. The support member 34 is pivotable between a stowed position (shown in solid lines in Figure 2) and a mounting position (shown in dotted lines in Figure 2). In the stowed position, the support member 34 is generally parallel to the right side of the partition wall 30. In the present embodiment, in the stowed position, the support member 34 at least partially rests against the right side of the partition wall 30 and does not extend rearward of the partition wall 30. In the mounting position, the support member 34 is generally perpendicular to the right side of the partition wall 30. In the present embodiment, when the support member 34 pivots from the stowed position to the mounting position, the support member 34 pivots towards the front of the partition wall 30, as indicated by arrow 52 in Figure 2. As such, the arm 32 and the support member 34 pivot in opposite directions as they pivot from their respective stowed positions to their respective mounting positions. As can be seen, the hinge 50 is disposed on the lower half of the partition wall 30 on a rear portion of the partition wall 30. As such, the support member 34 is connected closer to the rear end of the partition wall 30 than to the front end of the partition wall 30. In the present embodiments, the hinges 42 and 50 are located at the same distance from the rear edge 36 of the partition wall 30, but it is contemplated that they could be located at different distances. In the present embodiment, the support member 34 is made from the same material as the partition wall 30, but it is contemplated that the support member 34 could be made from a different material.

As can be seen, the arm 32 is longer than the support member 34. The arm 32 is sufficiently long to extend past the lateral center of the backrest 16 in order to place the hook 46 over the adjustment mechanism 22. The support member 34 is kept relative short so as not interfere, or interfere as little as possible, with a passenger sitting on the seat 12.

It is contemplated that the support member 34 could be connected to the partition wall 30 in other ways. For example, it is contemplated that the support member 34 could be non-permanently connected to the right side of the partition wall 30 in the mounting position, by clips for example, and that the support member 34 could be removed from the partition wall 30 when the partition 10 is not in use, such as when being stored or cleaned for example.

When the partition 10 is not mounted to the seat 12, the arm 32 and the support member 34 are placed in their respective stowed positions. As a result, the partition 10 can be stacked with other partitions 10 and take up little room. As such, the stacked partitions 10 can be conveniently stored in an aircraft's overhead bin for example.

To mount the partition 10 to the seat 12, the arm 32 and the support member 34 are first pivoted from their respective stowed positions to their respective mounting positions. The arm 32 is then inserted between the headrest 18 and the backrest 16 as shown in Figure 3. When inserting the arm 32, the hook 46 is placed over the connection between the headrest 18 and the backrest 16 (i.e. the adjustment mechanism 22), such that this connection is received in the hook 46 as shown in Figure 3. The support member 34 is abutted against the front of the backrest 16, on a left side thereof, at a position vertically lower than the headrest 18. As such, the support member 34 prevents the partition wall 30 from pivoting downward. It is contemplated that the support member 34 could be in contact with the backrest 16 at another location that is vertically lower than the headrest 18.

Once the partition 10 is mounted as shown, the partition wall 30 extends on a left side of the seat 12 as shown. In the present embodiment, the partition wall 30 is sized and the arm 32 is positioned on the partition wall 30 such that the partition wall 30 extends vertically higher than the top of the backrest 16 and extends along the left side of the backrest 16. Also, the lower edge 38 of the partition wall 30 is vertically higher than the left armrest 20, thus creating a space between the partition wall 30 and the left armrest 20. This space allows a passenger sitting on the seat 12 to comfortably use the left armrest 20. Once mounted, the partition 10 will move with the backrest 16 when the backrest 16 is inclined. In some embodiments, the hook 46 is sufficiently large that the partition 10 will not be displaced vertically when the height of the headrest 18 is adjusted. Once mounted, the partition 10 acts as a screen that provides some privacy to the passenger sitting on the seat 12 and also at least partially shields the passenger sitting in the seat from infectious aerosols and spray droplets that may be expelled from the mouths of nearby passengers sneezing or coughing.

It is contemplated that the arm 32 and the support member 34 could both be connected to a left side of the partition wall 30 for providing the partition wall 30 on the right side of the seat 12 when the partition 10 is mounted to the seat 12.

As no fixed hardware connection is required between the seat 12 and the partition 10, the partition 10 can be installed on almost any seat where the arm 32 can be received between a headrest and a backrest. Also, since the partition 10 is not fixedly connected using hardware, the partition 10 can be quickly and easily installed onto and removed from the seat 12. Also, since the partition 10 takes little room and can be stacked with other partitions 10 when the arm 32 and the support member 34 are in their stowed positions, stacks of partitions 10 can conveniently be removed from the vehicle and be sent for cleaning.

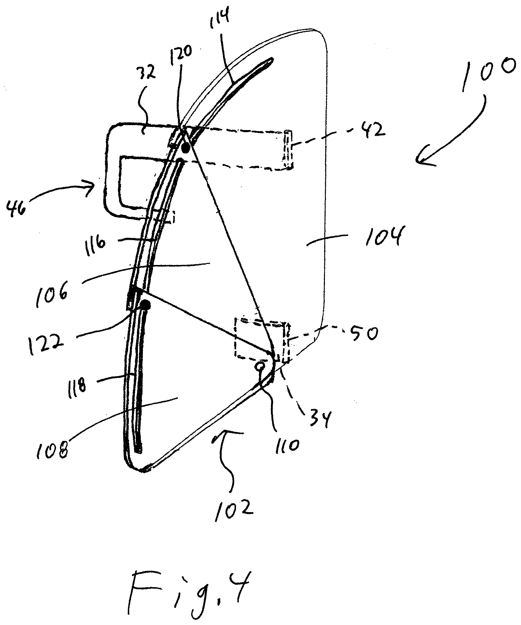

Turning now to Figures 4 and 5, a partition 100 that is an alternative embodiment of the partition 10 will be described. As can be seen in Figure 5, the partition 100 can be mounted between two adjacent seat 12B, 12C, so as to partially separate the seats 12B, 12C from each other. The partition 100 can also be mounted onto the aisle seat 12A, so as to partially separate the seat 12A from the aisle. The seat 12C is similar to the seat 12 and as such will not be described again in detail herein.

The partition 100 has a partition wall 102 made of three sections 104, 106, 108. The three sections 104, 106, 108 are pivotally connected to each other by a fastener 110, such as a rivet for example, at a lower end of the partition wall 102. The section 104 defines an arcuate slot 114, the section 106 defines an arcuate slot 116, and the section 108 defines an arcuate slot 118. A pin 120 is inserted through the section 106 and the slot 114 as shown. A pin 122 is inserted through the slots 116, 118. The sections 106, 108 can be pivoted relative to the section 104 about the fastener 110 to change the partition wall 102 between an extended configuration (shown in Figure 4) and a retracted configuration (shown in Figure 5). When the sections 106, 108 are pivoted about the fastener 110, the pins 120, 122 slide inside the slots 114, 116, 118 to guide and limit the movement of the sections 106, 108. By placing the partition wall 102 in the retracted configuration, a passenger can more easily enter or exit the seat 12 and can more easily interact with an adjacent passenger if desired. It is contemplated that the partition wall 102 could have only two or more than three sections. It is also contemplated that the movement of the sections 106, 108 could be guided and limited by features other than pins and slots. For example, the arcuate slots 114, 116, 118 could be replaced by arcuate grooves inside which pins slide.

The partition 100 has an arm 32 and a support member 34 pivotally connected to the partition wall 102. More specifically, the arm 32 and the support member 34 are pivotally connected to the section 104 of the partition wall 102 in the same way that the arm 32 and the support member 34 are connected to the partition wall 30 of the partition 10 described above. As such, the arm 32, the support member 34, and their connections to the partition wall 102 will not be described again in detail. Elements of the partition 100 that correspond to those of the partition 10 have been labeled with the same reference numerals.

Modifications and improvements to the above-described embodiments of the present technology may become apparent to those skilled in the art. The foregoing description is intended to be exemplary rather than limiting. The scope of the present technology is therefore intended to be limited solely by the scope of the appended claims.

## Claims

1. A partition for a seat of a mass transportation vehicle, the seat having:
a seat bottom;
a backrest connected to the seat bottom; and
a headrest connected to the backrest and being disposed in front of the backrest,
the partition comprising:
a partition wall;
an arm connected to a side of the partition wall, the arm being configured for being received between the headrest and the backrest; and
a support member connected to the side of the partition wall, the support arm being positioned for abutting a front of the backrest at a position vertically lower than the headrest.

2. The partition of claim 1, wherein the arm defines a hook, the hook being configured such that a connection between the headrest and the backrest is received at least in part in the hook.

3. The partition of claim 1 or 2, wherein:
the arm is pivotally connected to the side of the partition wall;
the arm is pivotable between a stowed position and a mounting position;
in the stowed position, the arm is generally parallel to the side of the partition wall; and
in the mounting position, the arm is generally perpendicular to the side of the partition wall and is positioned so as to be received between the headrest and the backrest.

4. The partition of claim 3, further comprising a hinge pivotally connecting the arm to the side of the partition wall.

5. The partition of claim 3 or 4, wherein, when pivoting from the stowed position to the mounting position, the arm pivots toward a rear of the partition wall.

6. The partition of any one of claims 1 to 5, wherein:
the support is pivotally connected to the side of the partition wall;
the support member is pivotable between a stowed position and a mounting position;
in the stowed position, the support member is generally parallel to the side of the partition wall; and
in the mounting position, the support member is generally perpendicular to the side of the partition wall and is positioned so as to contact the backrest.

7. The partition of claim 6, further comprising a hinge pivotally connecting the support member to the side of the partition wall.

8. The partition of claim 6 or 7, wherein, when pivoting from the stowed position to the mounting position, the support member pivots toward a front of the partition wall.

9. The partition of any one of claims 1 to 8, wherein the arm and the support member are connected closer to a rear end of the partition wall than to a front end of the partition wall.

10. The partition of any one of claims 1 to 9, wherein the arm is longer than the support member.

11. The partition of any one of claims 1 to 10, wherein:
the partition has multiple sections pivotally connected to each other; and
the sections are pivotable between an extended configuration and a retracted configuration.

12. A seat assembly comprising:
a seat comprising:
a seat bottom;
a backrest connected to the seat bottom; and
a headrest connected to the backrest and being disposed in front of the backrest; and
the partition of any one of claims 1 to 11 mounted to the seat, wherein:
the arm is received between the headrest and the backrest; and
the support member abuts the front of the backrest at a position vertically lower than the headrest.

13. A method for mounting a partition on a seat of a mass transportation vehicle, the partition having:
a partition wall;
an arm connected to a side of the partition wall; and
a support member connected to the side of the partition wall,
the seat having:
a seat bottom;
a backrest connected to the seat bottom; and
a headrest connected to the backrest and being disposed in front of the backrest,
the method comprising:
inserting the arm between the headrest and the backrest; and
abutting the support member against a front of the backrest at a position vertically lower than the headrest.

14. The method of claim 13, wherein:
the arm defines a hook; and
inserting the arm between the headrest and the backrest includes placing the hook over a connection between the headrest and the backrest.

15. The method of claim 13 or 14, further comprising:
pivoting the arm from a stowed position to a mounting position prior to inserting the arm between the headrest and the backrest; and
pivoting the support member from a stowed position to a mounting position prior to abutting the support member against the front of the backrest.
